# FASCICULE DE BREVET EUROPEEN

(11) **EP 1 317 116 B1**
(45) Date de publication et mention de la délivrance du brevet: **18.05.2005**
(21) Numéro de dépôt: 02102618.2
(22) Date de dépôt: 21.11.2002
(51) Int. Cl.: H04M 1/02, H01Q 1/24, H01Q 1/52

(54) **Téléphone mobile avec organe intégré dans l'espace entre l'antenne et le plan de masse**
Mobiltelefon mit einem integrierten Element in dem Freiraum zwischen Antenne und der Schaltplatine
Mobile telephone with an integrated element in the space between the antenna and the circuit board

(30) Priorité: 30.11.2001 FR 0115554; 08.03.2002 FR 0202979
(43) Date de publication de la demande: 04.06.2003
(73) Titulaire: SAGEM SA, 75015 Paris (FR)
(72) Inventeur: LERAY, Christian, 95800, COURDIMANCHE (FR)
(74) Mandataire: Schmit, Christian Norbert Marie

(56) Documents cités:
- EP-A- 0 924 793
- EP-A- 1 093 183
- EP-A- 1 102 347
- EP-A- 1 184 936
- EP-A- 1 294 051
- FR-A- 2 783 652
- US-B1- 6 201 501
- US-B1- 6 285 327

## Description

### Domaine de l'invention et état de la technique

L'invention concerne un téléphone mobile à antenne intégrée, dans lequel un organe, tel qu'un haut-parleur ou un vibreur, est implanté dans le volume de l'antenne. l'invention trouve des applications dans le domaine de la téléphonie mobile et, plus particulièrement, dans le domaine des téléphones mobiles comportant une antenne intégrée dans le boîtier du téléphone.

Les fabriquants de téléphones mobiles cherchent à diminuer de plus en plus la taille des téléphones mobiles. L'un des moyens pour diminuer l'encombrement de ces téléphones mobiles consiste à intégrer l'antenne dans le boîtier du téléphone, de sorte que l'antenne ne forme plus une saillie à une extrémité du boîtier du téléphone.

Par ailleurs, les téléphones mobiles proposent de plus en plus de fonctionnalités aux utilisateurs. Parmi ces fonctionnalités, il y a l'écoute amplifiée. Pour pouvoir amplifier l'écoute, c'est-à-dire le signal reçu par le téléphone mobile, un haut-parleur doit nécessairement être intégré dans le téléphone mobile. Or, un haut-parleur est un élément volumineux. Et, plus il est performant, plus son caisson de résonance est volumineux et, donc, plus le haut-parleur lui-même est volumineux. Il est donc difficile de combiner la contrainte relative à l'encombrement du mobile et l'intégration d'un haut-parleur dans le téléphone mobile.

Actuellement, la plupart des fabriquants de téléphones mobiles contourne le problème, soit en n'intégrant pas de haut-parleur avec écoute amplifiée et, par conséquent, en n'offrant pas la fonctionnalité d'écoute amplifiée, soit en conservant un encombrement de téléphone mobile plus important, par exemple, en installant une antenne extérieure au boîtier du téléphone mobile.

Une solution serait de faire cohabiter, dans le boîtier du téléphone mobile, une antenne intégrée et un haut-parleur. Généralement, les antennes utilisées dans les téléphones mobiles à antenne intégrée sont des antennes de type PIFA (Planar Inverted F Antenna). Une antenne PIFA est une antenne plane comportant un premier support qui constitue un point d'alimentation électrique et un second support qui constitue un point de masse. Le point d'alimentation et le point de masse sont connectés à un circuit imprimé, placé parallèlement à l'antenne. Le circuit imprimé constitue le plan de masse de l'antenne. Le volume entre l'antenne et le plan de masse sert de guide d'ondes aux ondes radiofréquences émises par l'antenne. Si un objet (ou organe), et en particulier un haut-parleur, est placé dans ce volume, l'objet va absorber une partie de ces ondes, c'est-à-dire une partie de l'énergie rayonnée par l'antenne. L'objet va ainsi favoriser une fuite des ondes radiofréquences hors du volume de l'antenne, ce qui dégrade les performances de rayonnement de l'antenne, c'est-à-dire les performances de l'antenne lors de l'émission et de la réception de signaux radiofréquences. En outre, plus l'objet est proche de l'antenne, plus il absorbe d'énergie rayonnée par l'antenne. En effet, du point de vue radiofréquence, l'objet, et en particulier le haut-parleur, constitue, par sa masse et par ses connexions, un élément rayonnant au même titre qu'une antenne. L'objet va donc recevoir, par couplage, une énergie en provenance de l'antenne et il va dissiper cette énergie, par ses connexions, dans la carte électronique (ou circuit imprimé) sur laquelle il est connecté. Cette énergie dissipée ne sera donc pas rayonnée, ce qui altère les performances de l'antenne (désadaptation de l'antenne).

Pour résoudre ce problème, on connaît un téléphone mobile comportant une antenne intégrée et un haut-parleur intégré. Dans ce téléphone mobile, le haut-parleur est placé de l'autre coté de la carte électronique, par rapport à l'antenne, et est connecté sur la face de la carte électronique qui n'est pas en regard de l'antenne. Autrement dit, l'antenne est connectée sur une face de la carte électronique du téléphone mobile et le haut-parleur est connecté sur l'autre face de la carte. Cet agencement permet d'intégrer le haut-parleur dans le boîtier du téléphone. Cependant, il présente l'inconvénient de nécessiter un boîtier relativement encombrant puisqu'il doit prévoir deux volumes distincts, d'une part, un premier volume pour l'implantation de l'antenne et, d'autre part, un deuxième volume pour l'implantation du haut-parleur et de son caisson de résonance.

Le document US-B1-6201501 décrit un dispositif de communication dans lequel un haut parleur est placé dans un espace formé par une antenne d'émission et de réception et un plan de masse. Ce haut parleur forme un chemin de fuite pour les ondes radiofréquence. Le dispositif comporte aussi des moyens pour modifier l'impédance du chemin de fuite; ces moyens consistent en une découpe réalisée dans l'antenne, en regard du haut parleur.

### Exposé de l'invention

L'invention a justement pour but de remédier aux inconvénients des téléphones mobiles décrits précédemment. A cette fin, l'invention propose un téléphone mobile à antenne intégrée, dans lequel un organe, tel qu'un haut-parleur, est implanté dans le volume de l'antenne. Autrement dit, l'invention propose d'implanter un organe, et en particulier, un haut-parleur dans un seul et même volume défini par l'espace compris entre l'antenne et le plan de masse et d'y insérer des moyens pour modifier l'impédance du chemin de fuite des ondes radiofréquences.

Plus précisément, l'invention concerne un téléphone mobile comprenant une antenne d'émission/réception d'ondes radiofréquence et un circuit imprimé formant un plan de masse pour l'antenne, caractérisé en ce qu'il comporte
- un organe interposé, au moins en partie, dans un espace formé par le plan de masse et l'antenne, cet organe formant un chemin de fuite pour les ondes radiofréquence émises ou reçues par l'antenne, et
- des moyens pour modifier une impédance du chemin de fuite.

Selon le mode de réalisation préféré de l'invention, l'organe est un haut-parleur.

### Brève description des figures

La figure 1 représente une vue de dessus de l'antenne intégrée dans un téléphone mobile et pouvant fonctionner, soit en mode GSM, soit en mode DCS.
La figure 2 représente une vue de côté d'une antenne et d'un haut-parleur intégrés, selon le mode de réalisation préféré de l'invention, dans un téléphone mobile.
La figure 3 représente le haut-parleur selon le mode de réalisation préféré de l'invention.
Les figures 4 et 5 représentent le haut-parleur et l'antenne intégrés , selon un second mode de réalisation de l'invention, dans le téléphone mobile.
Les figures 6 et 7 représentent le haut-parleur et l'antenne intégrés, selon un troisième mode de réalisation de l'invention dans le téléphone mobile.
Les figures 8A et 9A montrent le couplage entre l'antenne et le haut-parleur, respectivement, en l'absence et en présence de moyens de modification de l'impédance du chemin de fuites.
Les figures 8B et 9B montrent l'adaptation de l'antenne, respectivement, en l'absence et en présence de moyens de modification de l'impédance du chemin de fuites.
La figure 10 représente un vibreur selon le mode de réalisation préféré de l'invention.
La figure 11 représente une caméra numérique selon le mode de réalisation préféré de l'invention.

### Description détaillée de modes de réalisation de l'invention

L'invention concerne un téléphone mobile comportant une carte électronique 1, ou circuit imprimé 1, assurant les différentes fonctions électroniques du téléphone mobile, comme la gestion des appels téléphoniques, la mémorisation d'un répertoire téléphonique, etc. Ce téléphone mobile comporte aussi une antenne 2, intégrée dans le boîtier du téléphone mobile. Cette antenne 2 est une antenne plane de type PIFA. Elle est positionnée sensiblement parallèlement au circuit imprimé 1 qui constitue, de par sa réalisation, le plan de masse de l'antenne.

Le volume V entre l'antenne 2 et le circuit imprimé 1 constitue le volume de propagation des ondes radiofréquences émises par l'antenne 2. Selon l'invention, un organe 3, 4 ou 5 peut être, au moins en partie, interposé dans ce volume V. cet organe peut être un haut-parleur 3 ou bien un vibreur 4 ou encore une caméra numérique 5, ou tout autre objet qu'il peut être utile d'insérer dans un téléphone mobile.

Tout objet placé dans ce volume V crée un chemin de fuite des ondes radiofréquences, un chemin de fuite étant un chemin quelconque emprunté par les ondes radiofréquences pour partir de l'émetteur radiofréquence (en particulier de l'antenne) et aller dans l'objet situé entre ledit émetteur et le plan de masse. Pour minimiser cette fuite des ondes radiofréquences, il faut modifier l'impédance du chemin de fuite. Pour cela, l'invention propose d'introduire, dans le volume V, des moyens pour modifier l'impédance du chemin de fuite et, ainsi, éviter que des ondes radiofréquences ne soient absorbées par l'objet (appelé aussi organe). Ces moyens peuvent consister en une découpe dans l'antenne ou une découpe dans le circuit imprimé pour éviter que les ondes radiofréquences n'aillent vers l'organe. Ces moyens peuvent aussi consister en circuit dit "circuit bouchon" qui empêche les ondes radiofréquences reçues par l'organe d'atteindre le plan de masse.

Ces différents modes de réalisation des moyens de modification de l'impédance du chemin de fuite vont maintenant être décrits dans le cas où l'organe est un haut-parleur.

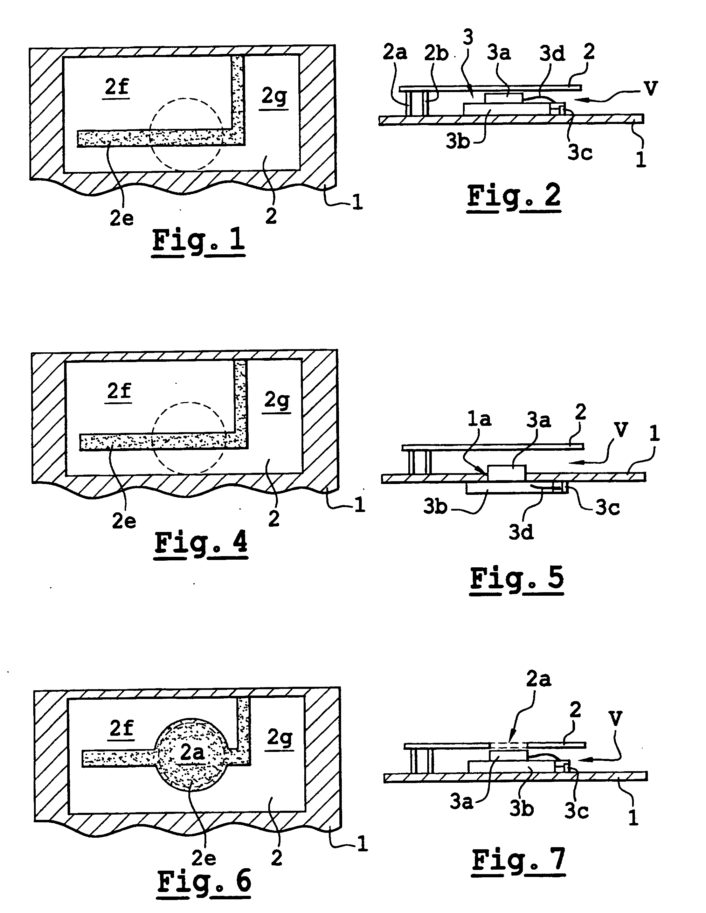

Les figures 1 à 7 montrent l'invention dans le cas où l'organe est un haut-parleur.

Sur la figure 1, on a représenté l'antenne 2 qui comporte une découpe 2e, représentée en mouchetés. Cette découpe, en forme sensiblement de « L », sépare une zone 2g d'une zone 2f de l'antenne. La zone 2g de l'antenne assure le rayonnement des signaux dans la bande de fréquence GSM, soit environ 900 MHz. La zone 2f assure le rayonnement des signaux dans la bande de fréquence DCS, soit environ 1800 MHz.

Sur cette figure 1, les traits en pointillés montrent l'emplacement du haut-parleur sous l'antenne 2.

Comme le montre la figure 2, l'antenne 2 est fixée et connectée sur le circuit imprimé 1 par l'intermédiaire de supports 2a et 2b, qui sont le point d'alimentation électrique et le point de masse de l'antenne. L'espace entre l'antenne 2 et la carte électronique 1 constitue le volume V de l'antenne, c'est-à-dire le volume de rayonnement des signaux émis et/ou reçus par l'antenne.

Dans le mode de réalisation préféré de l'invention, un haut-parleur 3 est logé dans ce volume V. Le haut-parleur 3 comprend un premier étage 3a comportant un noyau magnétique entouré de spires métalliques et un second étage 3b formant un caisson de résonance. Le premier étage est relié, par l'intermédiaire de fils de connexion 3d, à des lames métalliques ou à des ressorts qui forment les contacts métalliques 3c du haut-parleur. Le haut-parleur 3 est connecté au circuit imprimé 1 par l'intermédiaire de ces contacts électriques 3c.

Le circuit imprimé 1 comporte un ou plusieurs orifices, non visible sur la figure, permettant de laisser diffuser les sons hors du volume V de l'antenne 2.

D'un point de vue radiofréquence, les contacts électriques 3c du haut-parleur 3 sont à la masse par les capacités des plages de contact en vis-à-vis sur le circuit imprimé 1 et par des capacités de découplage associées. Ces contacts métalliques 3c ainsi que les fils de connexion 3d introduisent, dans le volume V de l'antenne, un circuit électrique couplé parasite, dont la fréquence de résonance perturbe l'émission et/ou la réception des signaux radiofréquence dans les bandes de fréquences GSM et DCS. Des mesures de rayonnement montrent que les pertes de rayonnement radiofréquence occasionnées par la présence du haut-parleur 3 dans le volume V sont de l'ordre de 3 dB en mode GSM et de 2 dB en mode DCS.

Comme expliqué précédemment, les signaux rayonnés par l'antenne 2 sont, en partie, absorbés par le haut-parleur 3. La quantité de signaux absorbés, c'est-à-dire d'ondes radiofréquences absorbées par le haut-parleur dépend de l'impédance du chemin de fuite généré par la présence du haut-parleur. Pour limiter ces pertes de rayonnement, l'invention propose de déplacer la résonance du circuit électrique parasite vers des fréquences autres que les fréquences des modes GSM et DCS. Pour cela, le téléphone mobile de l'invention comporte des moyens de modification de l'impédance du chemin de fuite crée par le haut-parleur. Ces moyens sont situés dans le volume V de l'antenne, soit dans le haut-parleur 3, soit dans l'antenne ou le circuit imprimé.

Dans le mode de réalisation préféré de l'invention, les moyens de modification de l'impédance comportent deux inductances connectées entre les extrémités des spires entourant le noyau magnétique et les contacts métalliques 3c du haut-parleur. Ce mode de réalisation est représenté sur la figure 3.

Plus précisément, la figure 3 représente un haut-parleur muni de moyens de modification de l'impédance, conformément au mode de réalisation préféré de l'invention. Ce haut-parleur 3 comporte, dans le premier étage 3a, un noyau magnétique 3i. Ce noyau 3i est entouré de spires métalliques 3h formant une bobine.

Le haut-parleur 3 comporte aussi un caisson de résonance audio 3b, contenant la membrane du haut-parleur et constituant le volume audio du haut-parleur 3.

Les deux extrémités des spires 3h entourant le noyau magnétique 3i sont connectées sur les contacts métalliques 3c du haut-parleur par l'intermédiaire des inductances L1 et L2. Ces deux inductances sont ainsi connectées sur le composant lui-même, c'est-à-dire au plus près du haut-parleur. Leur rôle est d'empêcher que les ondes radiofréquences reçues par le haut-parleur ne parviennent jusqu'au plan de masse, c'est-à-dire jusqu'au circuit imprimé. De cette façon, les ondes radiofréquences passant dans le haut-parleur ne sont pas absorbées par le haut-parleur et peuvent donc rayonner. Dans ce mode de réalisation, on modifie l'impédance du chemin de fuite en réalisant un circuit bouchon qui bloque le passage des ondes radiofréquences entre le haut-parleur et le plan de masse.

En pratique, les extrémités des spires 3i sont connectées sur des contacts métalliques intermédiaires 3c'. Les deux inductances L1 et L2 (appelées aussi self L1 et self L2) sont connectées par l'intermédiaire des fils de connexion 3d entre ces contacts intermédiaires 3c' et les contacts métalliques 3c. Ainsi, le noyau magnétique 3i, les spires 3h et les contacts intermédiaires 3c' sont situés à l'intérieur du boîtier du haut-parleur, c'est-à-dire dans les étages 3a et 3b. Seuls, les deux fils de connexion 3d et les deux inductances L1 et L2 sont à l'extérieur de ce boîtier. Selon ce mode de réalisation, les deux inductances sont placées sur une partie en saillie du second étage du haut-parleur.

Selon une variante de l'invention, les inductances L1 et L2 peuvent être remplacées par des ferrites, placées sur les connexions.

Les moyens de modification de l'impédance qui viennent d'être décrits permettent de déplacer la résonance du circuit électrique parasite, due au couplage entre l'antenne 2 et le haut-parleur 3, vers des fréquences qui ne sont pas utilisées dans le téléphone mobile, à savoir des fréquences différentes de la bande de fréquence GSM et de la bande de fréquence DCS.

Plus précisément, la valeur de ces moyens de modification de l'impédance est choisie de façon à déplacer la résonance du circuit électrique parasite, entre l'antenne et le haut-parleur, vers des fréquences inférieures à 1800 MHz. Pour cela, il faut choisir des inductances qui ont une impédance élevée en travail, c'est-à-dire en émission haute fréquence, mais une impédance basse en réception audio. Si on choisit, par exemple, des inductances d'une valeur de 47 nH, on déplace la résonance entre l'antenne et le haut-parleur vers des fréquences inférieures à la bande de fréquence en DCS. Ces valeurs sont toutefois suffisamment importantes pour que les inductances aient un effet dans la bande de fréquence GSM. Ainsi, l'insertion de deux inductances entre le haut-parleur et le circuit imprimé revient à isoler, en radiofréquence, le haut-parleur.

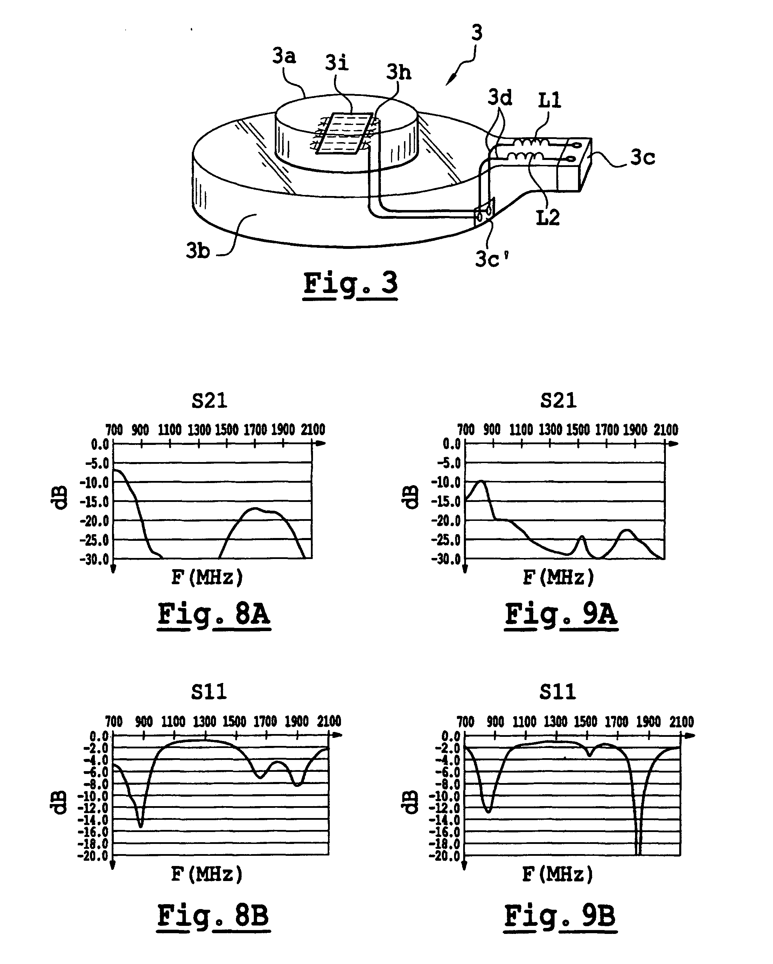

La figure 8A représente un diagramme montrant le couplage, c'est-à-dire les fuites, entre l'antenne 2 et le haut-parleur 3 dans le cas d'un haut-parleur intégré dans le volume entre l'antenne et le circuit imprimé, sans moyens de modification de l'impédance. La figure 8B représente un diagramme montrant l'adaptation de l'antenne dans le cas d'un haut-parleur intégré dans le volume entre l'antenne et le circuit imprimé, sans moyens de modification de l'impédance. La figure 9A représente un diagramme montrant le couplage entre l'antenne 2 et le haut-parleur 3 dans le cas d'un haut-parleur intégré dans le volume entre l'antenne et le circuit imprimé, dans le cas où le haut-parleur comporte les moyens de modification de l'impédance décrits précédemment, c'est-à-dire dans le cas où deux inductances de 47 nH sont connectées entre les spires entourant le noyau magnétique et les contacts métalliques. La figure 9B représente un diagramme montrant l'adaptation de l'antenne dans le cas d'un haut-parleur intégré dans le volume entre l'antenne et le circuit imprimé, dans le cas où le haut-parleur comporte les moyens de modification de l'impédance décrits précédemment. Ces courbes ont été obtenues en connectant un analyseur de réseau, d'une part, sur les contacts métalliques du haut-parleur et, d'autre part, sur l'antenne. Les courbes 8A et 9A, de type S21, montrent les signaux obtenus entre les contacts métalliques du haut-parleur et l'antenne. Les courbes 8B et 9B, de type S11, montrent les taux d'ondes stationnaires (TOS en français ou VSWR en anglais) obtenus sur la ligne d'alimentation de l'antenne.

Sur ces figures 8A et 9A, les maxima des courbes montrent les fréquences auxquelles il y a un fort couplage entre l'antenne et le haut-parleur. Au contraire, les minima des courbes montrent les fréquences auxquelles il y a peu de couplage entre l'antenne et le haut-parleur. Les figures 8A et 9A montrent que le dispositif de l'invention permet d'obtenir une diminution du couplage au niveau des fréquences d'émission en modes DCS et GSM.

En effet, si l'on compare les figures 8A et 9A, on voit que sans moyens de modification de l'impédance du chemin de fuite, il y a un fort pic de couplage aux environs de 1700 -1800 MHz, ce qui correspond justement à la fréquence d'émission en DCS. Avec les moyens de modification de l'impédance, l'ensemble de la courbe est beaucoup plus atténuée. En particulier, la courbe est à environ -25 dB à 1700 MHz lorsqu'il y a des moyens de modification de l'impédance alors qu'elle est à -17 dB lorsqu'il n'y a pas de moyens de modification de l'impédance. De même, vers 900 MHz et au-dessous, l'atténuation est sensiblement augmentée avec les moyens de modification de l'impédance.

La comparaison entre les figures 8B et 9B (TOS) confirme les résultats montrés sur les courbes précédentes. Ces courbes montrent que, à 1800 MHz, la désadaptation est moins importante ( moins de -20 dB) lorsqu'il y a des inductances pour découpler les signaux entre l'antenne et le haut-parleur alors qu'elle est de -7 dB sans ces moyens de modification de l'impédance. La courbe de TOS est moins accidentée aux environs de 900 Mhz.

Dans un autre mode de réalisation de l'invention, les moyens de modification de l'impédance consistent en une découpe réalisée dans le circuit imprimé 1. Ce mode de réalisation est représenté sur les figures 4 et 5. La figure 4 est identique à la figure 1. Elle montre l'antenne 2 et, en pointillés, le haut-parleur 3 situé sous l'antenne.

La figure 5 montre la découpe 1a réalisée dans le circuit imprimé 1. Cette découpe 1a laisse passer, en partie, le haut-parleur 3. Les dimensions de cette découpe sont adaptées pour permettre le passage du premier étage 3a du haut-parleur, le second étage 3b étant positionné sous le circuit imprimé 1. Cette découpe peut être réalisée autour de l'orifice du circuit imprimé destiné à la diffusion du son. Dans ce mode de réalisation, seul le premier étage du haut-parleur 3 est situé dans le volume V de l'antenne 2. De cette façon, les fils de connexion et les contacts métalliques qui constituent les éléments parasites à l'origine du couplage entre l'antenne 2 et le haut-parleur 3 sont situés sous le circuit imprimé 1. Ils ne créent donc plus de couplage dans le volume V. Ainsi, dans l'espace entre l'antenne et le circuit imprimé, il n'y a que le premier étage du haut-parleur, et cet étage ne comporte pas de connexions électriques. Il est donc possible de blinder cette partie du haut-parleur.

Dans un autre mode de réalisation de l'invention, les moyens de modification de l'impédance sont constitués par une découpe dans l'antenne 2. Dans ce mode de réalisation, le haut-parleur 3 est connecté exactement comme dans le premier mode de réalisation. Il est connecté au circuit imprimé 1 par les contacts métalliques 3c. Dans ce mode de réalisation, le haut-parleur ne comporte pas de moyens de modification de l'impédance. C'est l'antenne qui comporte les moyens de modification de l'impédance. Ces moyens de modification de l'impédance sont constitués par une ouverture réalisée dans l'antenne, en regard du premier étage du haut-parleur. Comme on le voit sur la figure 7, la partie de l'antenne située au-dessus du premier étage 3a du haut-parleur comporte une découpe qui épouse sensiblement la forme du premier étage du haut-parleur. Cette découpe est sensiblement ronde et placée en regard du premier étage du haut-parleur.

Ainsi, à l'endroit où le haut-parleur serait le plus proche de l'antenne, il n'y a pas de matière en regard du haut-parleur. De cette façon, il n'y a pas de couplage entre l'antenne et le haut-parleur.

Selon une variante, la découpe dans l'antenne peut être de dimension supérieure à la dimension du premier étage du haut-parleur, par exemple de la dimension de la surface totale du haut-parleur, de façon à ce qu'il n'y ait pas d'antenne en regard de la totalité du haut-parleur et, en particulier, des fils de connexion et des contacts métalliques du haut-parleur.

Sur la figure 6, on peut voir la forme de la découpe de l'antenne 2. Sur cette figure 6, on a représenté par, des pointillés, le premier étage du haut-parleur et, en mouchetés, la découpe de l'antenne. Celle-ci a une découpe sensiblement en forme de « L », comme dans les cas des figures 1 et 4, mais comporte en plus une découpe arrondie selon approximativement la forme des pointillés. On retrouve dans ce cas, comme dans les cas précédents, la zone 2g qui constitue l'antenne en mode GSM et la zone 2f qui constitue l'antenne en mode DCS. Ainsi, dans ce mode de réalisation, on accorde la surface de l'antenne en fonction de la forme du haut-parleur.

Dans les deux modes de réalisation où une découpe est réalisée dans l'antenne ou dans le circuit imprimé, le rôle de ces découpes est d'empêcher que les ondes radiofréquences ne passent dans l'organe, et en particulier dans le haut-parleur. Dans ces deux modes de réalisation, on modifie l'impédance du chemin de fuite en changeant l'emplacement du haut-parleur dans le volume V ou en modifiant la forme du volume V.

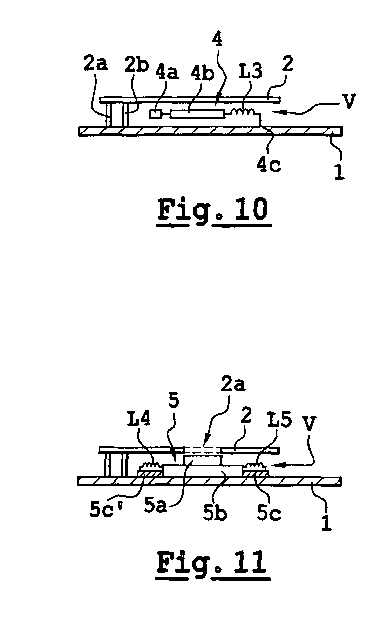

Sur la figure 10, on a représenté le cas où l'organe est un vibreur 4. Un vibreur est un appareil destiné à émettre des vibrations suffisamment fortes pour qu'elles puissent être ressenties par l'utilisateur, lorsque le téléphone mobile est dans sa poche. Le vibreur 4 comporte un moteur 4b apte à mettre en mouvement un balourd 4a. Comme le haut-parleur, le vibreur 4 est connecté au circuit imprimé 1 par deux fils de connexion. Une inductance est connectée sur chaque fil de connexion, entre le moteur 4b et le circuit imprimé 1. Seule l'inductance L3 est visible sur la figure 10; elle est connectée entre le moteur 4b et les contacts 4c du circuit imprimé 1. Seule l'inductance L3 est visible, sur la figure 10, entre le moteur 4b et les contacts 4c, la seconde inductance étant connectée parallèlement à L3 entre le moteur 4b et les contacts 4c. La connexion des inductances sur le vibreur est identique à celle des inductances sur le haut-parleur.

De même, les modes de réalisation décrits dans le cas où l'organe est un haut-parleur, dans lesquels l'antenne comporte une découpe et le circuit imprimé comporte une découpe, sont identiques lorsque l'organe est un vibreur. Ils ne seront donc pas décrits à nouveau.

Sur la figure 11, on a représenté le cas où l'organe est une caméra numérique 5. Il est, en effet, possible d'intégrer une caméra numérique miniature dans le volume V de l'antenne 2. Une caméra numérique comporte un boîtier 5b et un objectif 5a. Elle est connectée par deux contacts 5c et 5c' au circuit imprimé 1. Deux inductances L4 et L5 sont connectées sur les fils de connexion de la caméra, entre le boîtier 5b et les contacts 5c' et 5c, respectivement. Dans le cas d'une caméra, une ouverture doit être réalisée soit dans l'antenne 2, soit dans le circuit imprimé 1, en regard de l'objectif 5a, pour permettre la prise de vue. Dans le cas de la figure 11, c'est l'antenne 2 qui comporte une ouverture 2a pour la prise de vue. De cette façon, la caméra permet de réaliser des photos ou des vidéos, comme une caméra numérique classique. Dans le cas contraire où c'est le circuit imprimé qui comporte une ouverture pour la prise de vue, la caméra permet de réaliser des prises de vue de l'utilisateur du téléphone mobile, dans un but de visiophonie.

Trois cas viennent d'être décrits, où l'organe est un haut-parleur, un vibreur ou une caméra numérique. Il est bien entendu que plusieurs organes, parmi les trois types d'organes décrits, peuvent être interposés côte à côte dans le volume V de l'antenne. On peut, par exemple, placer, dans le volume V de l'antenne, un haut-parleur ainsi qu'un vibreur, chacun de ces deux organes comportant deux inductances connectées au plus près de l'organe.

Il est aussi possible d'utiliser plusieurs modes de réalisation des moyens de modification de l'impédance du chemin de fuite, dans un même téléphone mobile, chaque mode étant associé à un organe. Par exemple, il est possible d'interposer, dans le volume V de l'antenne une caméra avec ses deux impédances L4 et L5 et un haut-parleur avec une découpe 1a dans le circuit imprimé.

## Revendications

1. Téléphone mobile comprenant :
- une antenne (2) d'émission ou de réception d'ondes radiofréquence,
- un circuit imprimé (1) formant un plan de masse pour l'antenne,
- un organe (3) interposé, au moins en partie, dans un espace formé par le plan de masse et l'antenne, cet organe formant un chemin de fuite pour les ondes radiofréquence émises ou reçues par l'antenne, et
- des moyens pour modifier une impédance du chemin de fuite
**caractérisé en ce que** ledits moyens sont situés entre l'organe et le plan de masse.

2. Téléphone mobile selon la revendication 1, **caractérisé en ce que** les moyens pour modifier l'impédance du chemin de fuite comportent au moins une inductance en série.

3. Téléphone mobile selon la revendication 2, **caractérisé en ce que** l'inductance a une valeur de 47 nH.

4. Téléphone mobile selon la revendication 1, **caractérisé en ce que** les moyens pour modifier l'impédance du chemin de fuite comportent des ferrites en série.

5. Téléphone mobile selon l'une quelconque des revendications 1 à 4, **caractérisé en ce que** l'organe est un haut-parleur.

6. Téléphone mobile selon la revendication 5, dans lequel le haut-parleur comporte un noyau magnétique (3i) entouré de spires métalliques (3h) et un caisson de résonance (3b) des ondes acoustiques, muni de contacts métalliques, **caractérisé en ce que** les moyens pour modifier l'impédance du chemin de fuite comportent deux inductances connectées entre les spires et les contacts métalliques du haut-parleur.

7. Téléphone mobile selon la revendication 5, dans lequel le haut-parleur comporte un premier étage (3a) comprenant un noyau magnétique (3i) entouré de spires métalliques (3h) et un second étage formant un caisson de résonance (3b) du signal, **caractérisé en ce que** les moyens pour modifier l'impédance du chemin de fuite comportent une découpe (1a) réalisée dans le circuit imprimé (1), dans laquelle est logé le premier étage du haut-parleur, le second étage étant placé sous le circuit imprimé.

8. Téléphone mobile selon la revendication 7, **caractérisé en ce que** les moyens pour modifier l'impédance du chemin de fuite comportent un blindage du premier étage du haut-parleur.

9. Téléphone mobile selon l'une quelconque des revendications 1 à 4, **caractérisé en ce que** l'organe est un vibreur.

10. Téléphone mobile selon l'une quelconque des revendications 1 à 4, **caractérisé en ce que** l'organe est une caméra.

## Patentansprüche

1. Mobiltelefon, umfassend:
- eine Antenne (2) zum Senden oder zum Empfangen von Radiofrequenzwellen,
- eine gedruckte Schaltung (1), welche für die Antenne eine Masseebene ausbildet,
- ein Element (3), das mindestens teilweise, in einen Raum zwischengeschaltet ist, der durch die Masseebene und die Antenne ausgebildet wird, wobei dieses Element einen Kriechweg für die Radiofrequenzwellen bildet, die durch die Antenne ausgesendet oder empfangen werden, und
- Mittel, um eine Impedanz des Kriechweges zu verändern,
**dadurch gekennzeichnet, dass** die Mittel zwischen dem Element und der Masseebene angeordnet sind.

2. Mobiltelefon nach Anspruch 1, **dadurch gekennzeichnet, dass** die Mittel zum Verändern der Impedanz des Kriechweges mindestens eine Serieninduktivität aufweisen.

3. Mobiltelefon nach Anspruch 2, **dadurch gekennzeichnet, dass** die Induktivität einen Wert von 47 nH aufweist.

4. Mobiltelefon nach Anspruch 1, **dadurch gekennzeichnet, dass** die Mittel zum Verändern der Impedanz des Kriechweges Ferrits in Serie aufweisen.

5. Mobiltelefon nach irgendeinem der Ansprüche 1 bis 4, **dadurch gekennzeichnet, dass** das Element aus einem Lautsprecher besteht.

6. Mobiltelefon nach Anspruch 5, wobei der Lautsprecher einen Magnetkern (3i), welcher von Metallwindungen (3h) umgeben ist, und ein Resonanzgehäuse (3b) für akustische Wellen aufweist, welches mit Metallkontakten versehen ist, **dadurch gekennzeichnet, dass** die Mittel zum Verändern der Impedanz des Kriechweges zwei Induktivitäten aufweisen, die zwischen den Windungen und den Metallkontakten des Lautsprechers angeschlossen sind.

7. Mobiltelefon nach Anspruch 5, wobei der Lautsprecher eine erste Stufe (3a), die einen Magnetkern (3i) umfasst, der von Metallwindungen (3h) umgeben ist, und eine zweite Stufe aufweist, die ein Resonanzgehäuse (3b) für das Signal ausbildet, **dadurch gekennzeichnet, dass** die Mittel zum Verändern der Impedanz des Kriechweges einen Ausschnitt (1a) aufweisen, welcher in der gedruckten Schaltung (1) ausgeführt ist, in welchem die erste Stufe des Lautsprechers aufgenommen wird, wobei die zweite Stufe unter der gedruckten Schaltung angeordnet ist.

8. Mobiltelefon nach Anspruch 7, **dadurch gekennzeichnet, dass** die Mittel zum Verändern der Impedanz des Kriechweges eine Abschirmung der ersten Stufe des Lautsprechers umfassen.

9. Mobiltelefon nach irgendeinem der Ansprüche 1 bis 4, **dadurch gekennzeichnet, dass** das Element aus einem Schwingungserzeuger besteht.

10. Mobiltelefon nach irgendeinem der Ansprüche 1 bis 4,
**dadurch gekennzeichnet, dass** das Element aus einer Kamera besteht.

## Claims

1. A mobile telephone comprising:
- an antenna (2) for emitting or receiving radiofrequency waves,
- a printed circuit (1) forming a layout plan for the antenna,
- an element (3) interposed, at least in part, in a space formed by the layout plan and the antenna, this element forming an escape path for the radiofrequency waves emitted or received by the antenna, and
means for modifying the impedance in the escape path **characterized in that** said means are situated between the element and the layout plan.

2. The mobile telephone according to claim 1,
**characterized in that** the means for modifying the impedance of the escape path comprise at least one inductance in series.

3. The mobile telephone according to claim 2,
**characterized in that** the inductance has a value of 47 nH.

4. The mobile telephone according to claim 1,
**characterized in that** the means for modifying the impedance of the escape path comprise ferrites in series.

5. The mobile telephone according to any one of claims 1 to 4, **characterized in that** the element is a speaker.

6. The mobile telephone according to claim 5, in which the speaker comprises a magnetic core (3i) surrounded by metallic coils (3h) and a resonance box (3b) for acoustic waves, equipped with metallic contacts, **characterized in that** the means for modifying the impedance of the escape path comprise two inductances connected between the coils and the metallic contacts of the speaker.

7. The mobile telephone according to claim 5, in which the speaker comprises a first level (3a) comprising a magnetic core (3i) surrounded by metallic coils (3h) and a second level forming a resonance box (3b) of the signal, **characterized in that** the means for modifying the impedance of the escape path comprise a cut area (1a) achieved in the printed circuit (1), in which is housed a first level of the speaker, the second level being placed under the printed circuit.

8. The mobile telephone according to claim 7,
**characterized in that** the means for modifying the impedance of the escape path comprise a shield for the first level of the speaker.

9. The mobile telephone according to any one of claims 1 to 4, **characterized in that** the element is a vibrator.

10. The mobile telephone according to any one of claims 1 to 4, **characterized in that** the element is a camera.
